# EUROPEAN PATENT SPECIFICATION

(11) **EP 2 747 394 B1**
(45) Date of publication and mention of the grant of the patent: **16.11.2016**
(21) Application number: 13198237.3
(22) Date of filing: 18.12.2013
(51) Int. Cl.: H04M 1/725, H01R 13/66, H04R 1/10, G06F 1/16, G06K 7/10, H01R 13/46, H04R 5/04, H04M 1/02, H04M 1/60

(54) **ELECTRONIC APPARATUS, CONNECTOR, EARPHONE, METHOD OF CONNECTING PERIPHERAL DEVICE OF ELECTRONIC APPARATUS AND METHOD OF CONNECTING EARPHONE**
ELEKTRONISCHE VORRICHTUNG, STECKER, KOPFHÖRER, VERFAHREN ZUM ANSCHLUSS VON PERIPHERIEVORRICHTUNGEN EINER ELEKTRONISCHEN VORRICHTUNG UND VERFAHREN ZUM ANSCHLIESSEN DES KOPFHÖRERS
APPAREIL ÉLECTRONIQUE, CONNECTEUR, ÉCOUTEUR, PROCÉDÉ DE CONNEXION DE DISPOSITIF PÉRIPHÉRIQUE D'UN APPAREIL ÉLECTRONIQUE ET PROCÉDÉ DE CONNEXION D'ÉCOUTEUR

(30) Priority: 21.12.2012 KR 20120150994
(43) Date of publication of application: 25.06.2014
(73) Proprietor: Samsung Electronics Co., Ltd, Gyeonggi-do 443-742 (KR)
(72) Inventor: Yu, Jae-ryong, Gyeonggi-do (KR)
(74) Representative: Hewett, Jonathan Michael Richard

(56) References cited:
- EP-A2- 1 874 014
- EP-A2- 2 503 790
- WO-A1-2005/003983
- WO-A1-2009/047592
- WO-A2-2005/033846

## Description

The present invention relates to an electronic apparatus, a connector, an earphone, a method of connecting peripherals of the electronic apparatus and a method of connecting the earphone, and more particularly, to an electronic apparatus which uses interface information stored in an electronic tag, a connector, an earphone, a method of connecting peripherals of the electronic apparatus and a method of connecting the earphone.

Due to development of information communication technologies, various electronic apparatuses have been introduced recently. Such electronic apparatuses can perform various functions by connecting diverse peripherals. The peripherals mean all input and output devices and auxiliary memory devices that are connected to the electronic apparatus. Various kinds of peripherals have been developed to meet needs of users, and thus various kinds of interfaces of peripherals are getting gradually introduced.

WO 2009/047592 relates to a mobile device including an RFID reader, configured to receive information identifying a characteristic of a connected accessory.

EP 1,874,014 relates to a method for detecting the connection of an external module, determining the function of the module, and activating an appropriate function by exchanging control signals with the module.

An electronic apparatus has a limited space for an interface to connect with peripherals due to users' demand on slimness and miniaturization to increase portability. As a result, an electronic apparatus cannot support various interfaces (ports or cables) so that there occurs a problem of limiting a usage of peripherals with the electronic apparatus.

In addition, even if peripherals have the same interface, the peripherals often have different arrays of pins of a connector connected to an electronic apparatus according to the manufacturers. In particular, in a case of an earphone, there is a problem that some functions cannot be used in electronic apparatuses of different manufacturers. The present invention provides an electronic apparatus which uses interface information stored in an electronic tag, a connector, an earphone, a method of connecting the electronic apparatus to peripherals and a method of connecting the electronic apparatus to the earphone.

Additional features and utilities of the present invention will be set forth in part in the description which follows and, in part, will be obvious from the description, or may be learned by practice of the invention.

The foregoing and/or other features and utilities of the present invention may be achieved by providing an electronic apparatus capable of being connected via a connector to a peripheral device. The electronic apparatus includes a common interface capable of being connected to the connector; a plurality of port modules, a switch configured to connect one of the plurality of port modules to the common interface, a wireless reader configured to receive interface information of the connector through a local access to the connector, and a controller configured to select, based on the received interface information, one port module to be connected to one among the plurality of port modules and a pin of the common interface to be electrically connected and control the switch to connect the selected port module and the pin of the common interface.

The plurality of port modules may include at least one of a USB host module, an HDMI module, an IEEE 1394 module, an SCSI module, an EIDE module, a SATA module, a display part module, a LAN module, a multi-card reader module and an audio module.

The interface information may include interface specification (or standard) information supported by the connecter and pin information of the connector.

The wireless reader may include at least one of an RFID reader and an NFC reader.

The number of the pin of the common interface may be provided to cover a supportable interface specification of the peripheral device.

The foregoing and/or other features and utilities of the present invention may also be achieved by providing a connector to connect a peripheral device to an electronic apparatus. The connector includes a first connector configured as a first interface type for connecting the peripheral device, a second connector configured as a second interface type for connecting electronic apparatus, and a tag configured to store interface information of the connector and provide the interface information to the electronic apparatus when a local access to the electronic apparatus is conducted.

The tag may include one of an RFID tag and an NFC tag.

The interface information may include interface specification information supported by the connecter and pin information of the connector.

The foregoing and/or other features and utilities of the present invention may also be achieved by providing an electronic apparatus capable of being connected to an earphone. The electronic apparatus includes a jack connector configured to be connected to a jack of the earphone, a signal processor configured to process a signal received and transmitted by the earphone, a switch configured to connect the signal processor and a terminal of the jack connector, a wireless reader configured to receive interface information of the jack through a local access to the earphone, and a controller configured to determine, based on the received interface information, an array of the terminal of the jack, and control the switch to connect the signal processor and the terminal of the jack connector according to the determined array of the terminal.

The array of the terminal of the jack may include at least one of Ground/Mic/Left/Right, Left/Right/Ground/Mic and Left/Right/Mic/Ground.

The interface information may include information on the array of the terminal of the jack.

The wireless reader may include at least one of an RFID reader and an NFC reader.

The foregoing and/or other features and utilities of the present invention may also be achieved by providing an earphone including a speaker, a microphone, a jack configured to connect an electronic apparatus, and a tag configured to store interface information of the jack and provide the information of the jack to the electronic apparatus when a local access to the electronic apparatus is conducted.

The tag may include one of an RFID tag and an NFC tag.

The interface information may include information on an array of a terminal of the jack.

The array of the terminal of the jack may include at least one of Ground/Mic/Left/Right, Left/Right/Ground/Mic and Left/Right/Mic/Ground.

The foregoing and/or other features and utilities of the present invention may also be achieved by providing a method of connecting an electronic apparatus to a peripheral device, the electronic apparatus capable of being connected via a connector to the peripheral device and comprising a plurality of port modules. The method includes receiving interface information of the connector through a local access to the connector, selecting, based on the received interface information, one port module to be connected to one among the plurality of port modules and a pin of a common interface to be electrically connected, and connecting the selected port module and the selected pin of the common interface.

The foregoing and/or other features and utilities of the present invention may also be achieved by providing a method of connecting an electronic apparatus to an earphone, the electronic apparatus capable of being connected to an earphone. The method includes receiving interface information of a jack of the earphone through a local access to the earphone, determining, based on the received interface information, an array of the terminal of the jack; connecting the signal processor of the electronic apparatus and the terminal of the jack connector according to the determined array of the terminal of the jack.

The foregoing and/or other features and utilities of the present invention may also be achieved by providing An electronic apparatus capable of being connected to an external device, the electronic apparatus including a connecting portion to be connected to a connector portion of the external device, a wireless reader configured to wirelessly receive interface information on the connector portion of the external device from a tag of the external device, and a controller configured to determine configuration of the connecting portion according to the wirelessly received interface information such that a signal transmitted from the external device is received and processed.

The electronic apparatus may further include a plurality of port modules, the connecting portion may include a common interface, and the controller may select one of the plurality of modules according to the wirelessly received interface information.

The common interface may include a plurality of types of terminals to be connectable to a plurality of connector portions including the connector portion of the external device.

The external device may include a peripheral device and a connector having the connector portion connected to the peripheral device.

The tag may be disposed on the connector portion of the external device.

The connector portion of the external device may include a jack, and the connecting portion may include a jack connector to be connected to the jack of the external device.

The electronic apparatus may further include a processor having a plurality of terminals, and the controller may assign terminals of the jack to the corresponding terminals of the processor according to the wirelessly received interface information.

The jack connector may include a plurality of types of sub-connectors to be connectable to a plurality of jacks including the jack of the external device.

The foregoing and/or other features and utilities of the present invention may also be achieved by providing an electronic apparatus capable of being connected to an external device, the electronic apparatus including a connecting portion to be connectable to a plurality of external devices, a wireless reader configured to wirelessly receive interface information from a tag of one of the external devices, and a controller configured to determine configuration of the connecting portion according to the wirelessly received interface information such that a signal transmitted from the one external device is received and processed.

The foregoing and/or other features and utilities of the present invention may also be achieved by providing an external device connectable to an external electronic apparatus, including a connector portion, a tag attached to the connector portion and storing interface information of the connector portion, and an input and/or output unit connected to the connector portion to input and/or output a plurality of signals through the connector portion according to a connection between the connector portion and the external electronic apparatus and a communication between the tag and the external electronic apparatus.

These and/or other features and utilities of the present invention will become apparent and more readily appreciated from the following description of the embodiments, taken in conjunction with the accompanying drawings of which:
FIG. 1 is a block diagram illustrating a connection among an electronic apparatus, a connector and a peripheral device according to an exemplary embodiment of the present invention;
FIG. 2 is a block diagram illustrating an electronic apparatus according to an exemplary embodiment of the present invention;
FIG. 3 is a block diagram illustrating a connector according to an exemplary embodiment of the present invention;
FIG. 4 is a view illustrating a connector according to an exemplary embodiment of the present invention;
FIG. 5 is a view illustrating a connection among an electronic apparatus, a connector and a peripheral device according to an exemplary embodiment of the present invention;
FIG. 6 is a block diagram illustrating a connection between an electronic apparatus and an earphone according to an exemplary embodiment of the present invention;
FIG. 7 is a block diagram illustrating an electronic apparatus according to an exemplary embodiment of the present invention;
FIG. 8 is a block diagram illustrating an earphone according to an exemplary embodiment of the present invention;
FIG. 9 is a view illustrating an array of terminals of a jack of an earphone according to an exemplary embodiment of the present invention;
FIG. 10 is a view illustrating a method of connecting an electronic apparatus and an earphone according to an exemplary embodiment;
FIG. 11 is a flowchart illustrating a method of connecting an electronic apparatus and a peripheral device according to an exemplary embodiment of the present invention; and
FIG. 12 is a flowchart illustrating a method of connecting an electronic apparatus and an earphone according to an exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

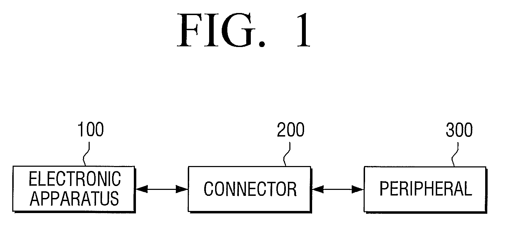

FIG. 1 is a block diagram illustrating a connection among an electronic apparatus 100, a connector 200 and a peripheral device 300 according to an exemplary embodiment of the present invention.

Referring to FIG. 1, the peripheral device 300 may be connected to the electronic apparatus 100 via the connector 200.

The electronic apparatus 100 may be implemented as a personal computer (PC), a notebook PC, a tablet PC, a PDA and a mobile phone.

The peripheral device 300 connected via the connector 200 to the electronic apparatus 100 may be a display device, an external storage device, an image forming device, an image reading device, a camera, a speaker and a microphone.

The electronic apparatus 100 according to an exemplary embodiment may be connected via the connector 200 designed according to an interface of the peripheral device 300. In detail, the connector 200 may include one connector corresponding to an interface specification of the peripheral device 300 and another connector corresponding to a specification of a common interface 110 of the electronic apparatus so as to physically connect the electronic apparatus 100 and the peripheral device 300.

Due to the connector (200), the electronic apparatus (100) needs to have a unified interface port only so that the electronic apparatus (100) can be miniaturized and slimmed.

The connector (200) includes a tag to provide interface information of the peripheral device 300 to the electronic apparatus 100.

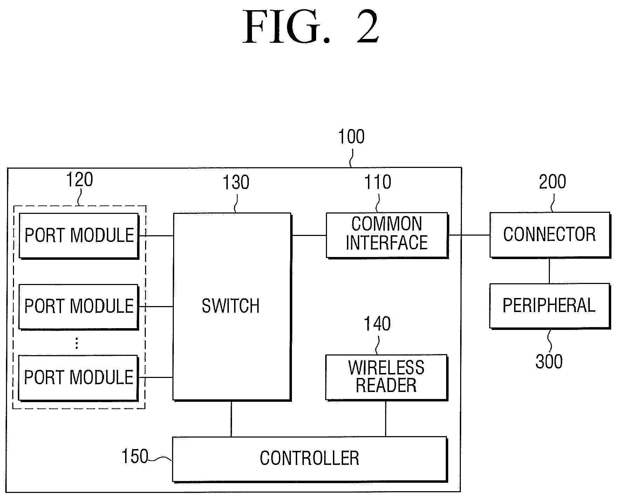

The above configuration will be explained in detail with reference to FIG. 2.

FIG. 2 is a block diagram illustrating the electronic apparatus 100 of FIG. 1 according to an exemplary embodiment of the present invention.

Referring to FIG. 2, the electronic apparatus 100 includes a common interface 110, a plurality of port modules 120, a switch (or a switching unit) 130, a wireless reader 140 and a controller 150.

The common interface 110 may be connected to the connector 200. In detail, the common interface 110 comprises one connection port so that the common interface 110 may be physically and electrically connected to the peripheral device 300 with various interfaces by using the connector 200 which satisfies the interface specification of the common interface 110.

A number of pins of the common interface (110) are provided to correspond to the supportable interface specification of the peripheral device (300). For example, when there are a peripheral device A with 3 pins, a peripheral device B with 7 pins and a peripheral device C with 10 pins, it is possible that the common interface is designed to have 10 pins or more.

The port module 120 processes a signal transmitted via the common interface 110. In detail, the electronic apparatus 100may include at least one port module 120, and each port module may process a signal to perform a communication with the peripheral device 300 corresponding to the interface specification. Therefore, the port module 120 may be referred to as a plurality of port modules 120.

The port module 120 may include at least one of a universal serial bus (USB) host module, a high-definition multimedia interface (HDMI) module, an Institute of Electrical and Electronics Engineers (IEEE) 1394 module, a small computer system interface (SCSI) module, an extended display information data (EDID) module, enhanced integrated drive electronics (EIDE) module, a serial advanced technology attachment (SATA) module, a display part module, a local area network (LAN) module, a multi-card reader module and an audio module. As an example, the USB Host module may process a signal to perform a communication with the peripheral device 300 having a USB interface specification.

The switch 130 connects one of the plurality of port modules 120 and the common interface 110. In detail, the switch 130 may electrically connect a port module among a plurality of port modules that meets the interface specification of the peripheral device 300 to the common interface 110.

The switch 130 may select at least one of the port modules 120 which can comply with the interface specification of the peripheral device 300 under the control of the controller 150 and connect the corresponding port module 120 to the common interface 110.

The switch 130 may be configured as a multiplexer circuit.

The wireless reader 140 receives interface information of the connector 200 through a local access to the connector 200. In detail, when the local access to the connector 200, to which a local wireless communication tag is attached, is conducted, the wireless reader 140 may read the interface information written in the tag and provide the read interface information to the controller 150.

The wireless reader 140 may include a wireless frequency module and an antenna coil. The wireless reader 140 emits electromagnetic waves via the antenna coil. Accordingly, at a local wireless communication tag (not illustrated) attached to the connector 200 located within an electromagnetic wave range based on the electronic apparatus 100, a current is induced according to an electromagnetic induction method. Thus, an integrated circuit in the local wireless communication tag is driven so that an RF signal including stored data is transmitted. The wireless frequency module in the wireless reader 140 receives the RF signal via the antenna coil, performs demodulation and decoding on the received RF signal and detects the data from the RF signal.

Here, the local access means an operation that at least one of a local wireless communication tag and a local wireless communication reader moves to the other one such that the local wireless communication tag and the local wireless communication reader can be located within a communication capable range. This may also be referred to as tagging. When the local wireless communication reader or tag is located within a communication capable range, the local wireless communication reader can read information written in the local wireless communication tag.

As an example of the local wireless communication, a near field communication (NFC) may be used. The NFC is a non-contact local wireless communication utilizing a frequency band of 13.56 Mz. If the NFC technology is used, data can be received and transmitted when a plurality of terminals are approached near such as within about 10 cm.

As other examples of the local wireless communication, a barcode, a QR code, WiFi, Zigbee, Bluetooth and RFID may be used.

Collected data may be related to interface information of the connector 200.

The interface information of the connector 200 may include interface specification information supported by the connector 200 and pin information of the connector 200. In detail, the interface specification information may be exemplified as information on USB, HDMI, IEEE1394, SCSI, EDID, EIDE, Serial ATA (SATA), display port, LAN, and Multi-card reader, and the pin information of the connector 200 means pin information of the connector used according to the interface specification.

Based on the interface specification information, a port module may be selected from a plurality of port modules (120) of the electronic apparatus 100 to process a signal to perform a communication, and based on the pin information of the connector 200, a pin related to an input and/or output operation may be selected from pins of the common interface 110.

Based on the received interface information, the controller 150 selects one port module to be connected among a plurality of port modules 120 and one or more pins of the common interface 110 to be electrically connected, and controls the switch 130 to connect the selected port module and the selected one or more pins of the common interface 110. In detail, based on the interface information of the connector 200 provided from the wireless reader 140, the controller 150 selects one port module to be connected among a plurality of port modules 120 and selects a pin of the common interface 110 to be electrically connected. The controller 150 may control the switch 130 to connect the selected port module and the selected pin of the common interface 110.

**[Table 1]**

| Interface specification | USB |
|---|---|
| Total number of pins | 4 |
| Pin signal specification | Pin 1 - VCC (power source) |
| | |
| | Pin 2 - D- (data-) |
| | Pin 3 - D+ (data+) |
| | |
| | Pin 4 - GND (ground) |

As an example, when the received interface information is stored as in table 1, the controller 150 may select a USB module from a plurality of port modules 120 and select pins 1, 2, 3 and 4 of the common interface 110 as a power source (VCC) pin, a data (-) pin, a data (+) pin and a ground pin. The controller 150 may control the switch 130 to connect the selected USB module and pins 1, 2, 3 and 4.

The controller 150 may control each of corresponding elements in the electronic apparatus 100 to perform a function thereof according to the signals received from the common interface 110.

The electronic apparatus 100 explained with regard to FIG. 2 may automatically connect various peripherals 300 based on interface information provided from the connector 200.

In addition, the electronic apparatus 100 does not need to have various interface ports but needs to have a common interface as illustrated above or below so that the electronic apparatus (100) can be miniaturized and slimmed.

Hereinafter, a connector connected to an electronic apparatus will be illustrated hereinafter according to an exemplary embodiment of the present invention.

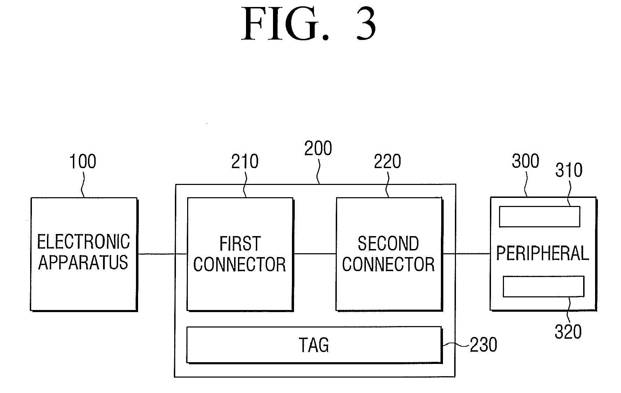

FIG. 3 is a block diagram illustrating the connector 200 of FIG. 1 according to an exemplary embodiment of the present invention.

Referring to FIG. 3, the connector (200) includes a first connector 210, a second connector 220, and a tag 230.

The first connector 210 is connected to the electronic apparatus 100. In detail, the first connector 210 is connected to the common interface 110 of the electronic apparatus 100. Accordingly, the first connector 210 is configured to correspond to a shape of the common interface 100, and the number of pins should also be configured to be the same as the number of pins of the common interface 100.

The second connector 220 is connected to the peripheral device 300. In detail, the second connector 220 is connected to an interface of the peripheral device 300. Accordingly, the second connector 210 is configured to correspond to a shape of the interface of the peripheral device 300, and the number of pins should also be configured to be the same as the number of pins of the interface of the peripheral device 300.

The shape of the second connector 220 may be configured to correspond to the interface specification of the peripheral device 300 that is supported by the connector 200.

The tag 230 stores interface information of the connector 200 and provides the interface information to the electronic apparatus 100 when a local access to the electronic apparatus 100 is conducted.

The interface information may include interface specification information supported by the connector 300 and pin information of the connector 300.

The tag 230 may be configured as one of an RFID tag and an NFC tag.

The connector 200 explained with regard to FIG. 3 may be configured to form a second connector 220 corresponding to various interface specifications. Accordingly, a connection to the electronic apparatus 100 can be conducted by using the connector 200, which meets the interface specification of the peripheral device 300.

The tag 230 of the connector 200 provides the interface specification information of the connector 200 and the pin information of the connector to the electronic apparatus (100) and allows the electronic apparatus 100 to select a corresponding port module (120) to perform automatic connection between the electronic apparatus 100 and the peripheral device 300.

The peripheral device may include an output unit 310 to output a signal, such as a video signal and/or an audio signal, according to one or more signals received from the electronic apparatus 100 through the connector 200. The peripheral device may include an input unit 320 to input a signal, such as a video signal and/or audio signal, to the electronic apparatus 100 through the connector 200. According to the determination on the wirelessly received interface information and the selection of one of the port modules, the signal may be properly transmitted, received, and recognized between the electronic apparatus 100 and the peripheral device 300.

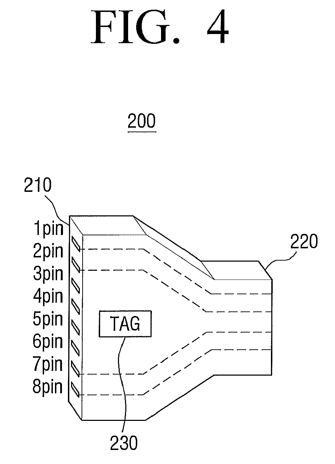

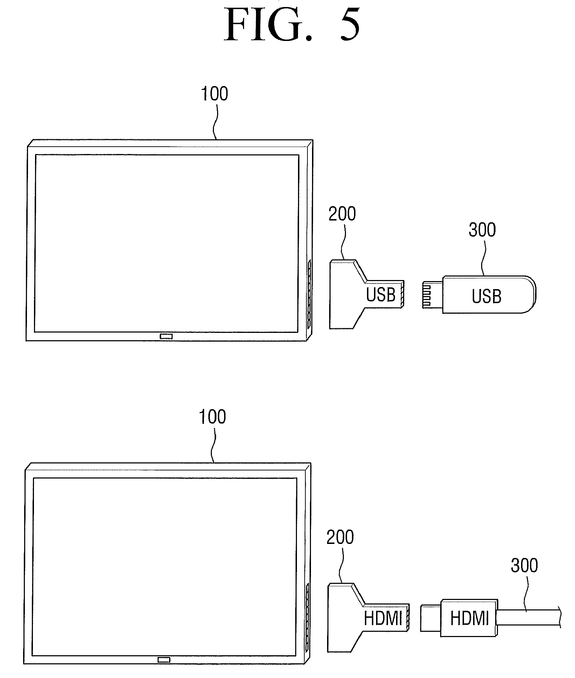

Hereinafter, a connector and a connection configuration according to an exemplary embodiment of the present invention will be explained with regard to FIGS. 4 and 5.

FIG. 4 is a view illustrating the connector of FIG. 1 according to an exemplary embodiment of the present invention.

Referring to FIG. 4, the first connector 210 of the connector 200 connected to the electronic apparatus 100 includes a total of 8 pins. The second connector 220 includes a total of 4 pins. Accordingly, pin 1, pin 2, pin 7 and pin 8 of the first connector 210 are electrically connected to the corresponding pins of the second connector 220.

In this case, the tag 230 may store therein interface information that input and output signals of the peripheral device (300) may be connected to pin 1, pin 2, pin 7 and pin 8, and the above information may be provided to the electronic apparatus 100 when a wireless access to the electronic apparatus 100 is conducted.

The electronic apparatus 100 may select a pin to be connected at the common interface 110 by using the pin information of the connector 200.

FIG. 5 is a view illustrating a connection among the electronic apparatus 100, the connector 200 and the peripheral device 300 of FIG. 1 according to an exemplary embodiment.

As described in FIG. 5, the electronic apparatus 100may include the common interface 110 and may be connected via the connector 200 to the peripheral device 300.

A user may conduct a connection to the electronic apparatus 100 by using the connector 200 corresponding to the interface specification of the peripheral device 300 to be used.

As an example, the peripheral device 300 (300a) of a USB interface specification should use the connector 200 of a USB type 200a, and the peripheral device 300 (300b) of an HDMI interface specification should use the connector 200 of an HDMI type 200b.

The electronic apparatus 100 and the connector 200 explained with regard to FIGS. 2-5 may automatically connect various peripherals 300 by using wirelessly-provided interface information.

In addition, the electronic apparatus 100 does not need to have various interface ports to corresponding to various peripheral devices, but needs to have a common interface so that the electronic apparatus 100 can be miniaturized and slimmed.

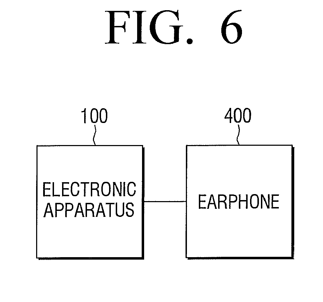

Hereinafter, an electronic apparatus and an earphone according to an exemplary embodiment of the present invention will be explained with regard to FIGS. 6-9. In the exemplary embodiment illustrated in FIGS. 2-5, physical interfaces of peripherals (or shapes (structures) of cable connectors) are individually different, and thus peripherals are connected to an electronic apparatus by using a separate connector. However, in this exemplary embodiment, an array of terminals of a jack is different and the physical interface (jack of an earphone) is identical, and thus a separate connector is not needed.

FIG. 6 is a block diagram illustrating a connection between an electronic apparatus 100 (100a) and an earphone 400 according to an exemplary embodiment of the present invention.

Referring to FIG. 6, the earphone 400 is directly connected to the electronic apparatus 100.

The electronic apparatus 100 may be implemented as a personal computer (PC), a notebook PC, a tablet PC, a PDA and a mobile phone.

The earphone 400 may be a microphone/speaker combination earphone. The earphone 400 may be a combination of units (elements) of the connector 200 and the peripheral device 300 of FIG. 1.

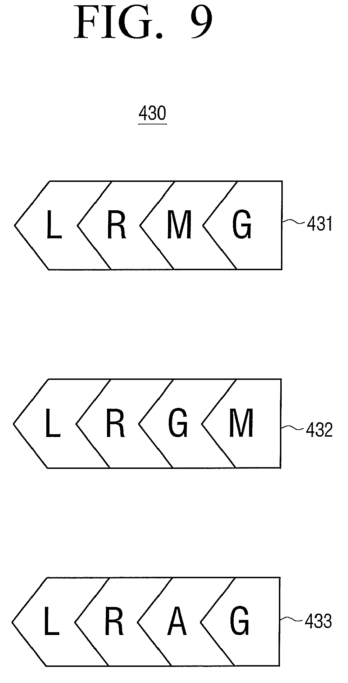

The earphone 400 may have different arrays of terminals of a jack connected to the electronic apparatus (100) according to a user or design preference. This will be explained in detail with regard to FIG. 9.

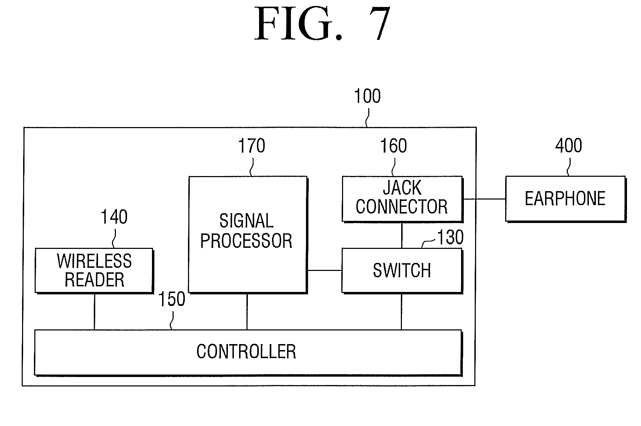

FIG. 7 is a block diagram illustrating the electronic apparatus 100 of FIG. 6 according to an exemplary embodiment of the present invention.

Referring to FIG. 7, the electronic apparatus 100 may include a switch 130, a wireless reader 140, a controller 150, a jack connector 160 and a signal processor 170.

The jack connector 160 is an element to connect to the earphone 400. In detail, the jack connector (160) is connected to the jack of the earphone 400 so that the electronic apparatus (100) and the earphone (400) may be connected physically and electrically. The jack connector 160 may be referred to an interface to be connected to an external device, such as the earphone 400.

The signal processor 170 processes a signal received from and transmitted to the earphone 400. In detail, the signal processor 170 processes a signal which will be received and transmitted via the jack connector 160. The signal processor 170 may include a speaker processor and a microphone processor and may process a signal to be transmitted to a speaker of the earphone 400 and a signal received by a microphone of the earphone 400.

The switch 130 connects the signal processor 170 and the terminal of the jack connector 160. In detail, the switch 130 may connect the signal received and transmitted by the earphone 400 via the terminal of the jack connector 160 to the signal processor 170.

The switch 130 may connect the signal processor 170 to correspond to the array of the terminals of the jack under the control of the controller 150.

The switch 130 may be configured as a multiplexer circuit.

The wireless reader 140 receives interface information of the jack through a local access to the earphone 400. In detail, when a local access to the earphone 400, to which a local wireless communication tag is attached, is conducted, the wireless reader 140 may read information written in the tag of the earphone 400 and provide the read information to the controller 150.

The wireless reader 140 may include a wireless frequency module and an antenna coil. The wireless frequency module of the wireless reader 140 emits electromagnetic waves via the antenna coil. Accordingly, at a local wireless communication tag (not illustrated) attached to the earphone 400 located within the electromagnetic wave range based on the electronic apparatus 100, a current is induced according to an electromagnetic induction method. Thus, an integrated circuit in the local wireless communication tag is driven so that an RF signal including stored data is transmitted. The wireless frequency module in the wireless reader 140 receives the RF signal via the antenna coil, performs demodulation and decoding on the received RF signal and detects data from the RF signal.

Here, the local access means an operation to dispose or move at least one of a local wireless communication tag and a local wireless communication reader to the other one so that both the local wireless communication tag and the local wireless communication reader are located within a communication capable range. This may also be referred to as tagging. When the local wireless communication reader or tag is located within a communication capable range, the local wireless communication reader can read information written in the local wireless communication tag.

As an example of the local wireless communication, a near field communication (NFC) may be used. The NFC is a non-contact local wireless communication utilizing a frequency band of 13.56 Mz. If the NFC technology is used, data can be received and transmitted when a plurality of terminals are approached near such as within about 10 cm.

As other examples of the local wireless communication, a barcode, a QR code, WiFi, Zigbee, Bluetooth and RFID may be used.

The controller 150 determines an array of terminals of the jack based on the received interface information and controls the switch 130 to connect the signal processor 170 and the terminal of the jack connector 160 according to the determined array of the terminals. In detail, the controller 150 determines an array of terminals of the jack by using interface information of the earphone 400 provided from the wireless reader 140. The controller 150 may control the switch 130 to connect an input of the signal processor 170 and the terminal of the jack connector 160.

The array of terminals of the jack may be one of Ground/Mic/Left/Right, Left/Right/Ground/Mic and Left/Right/Mic/Ground.

As an example, when received interface information stores an array of terminals of the jack as 1-Ground/2-Mic/3-Left/4-Right, the controller 150 may control the switch 130 to connect a terminal 2 of the jack connector 160 to the microphone processor of the signal processor 170, connect a terminal 3 to a left input of the speaker processor of the signal processor 170, and connect a terminal 4 to a right input of the speaker processor of the signal processor 170.

The controller 150 may control each of the corresponding elements in the electronic apparatus 100.

The electronic apparatus 100 explained with regard to FIG. 7 may connect various types of earphones by using interface information provided from the corresponding earphone.

Hereinafter, an earphone connected to an electronic apparatus according to an exemplary embodiment will be explained.

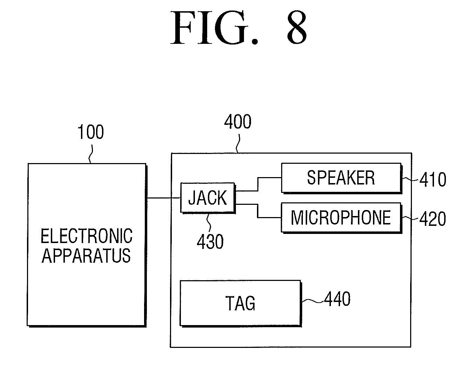

FIG. 8 is a block diagram illustrating the earphone 400 of FIG. 6 according to an exemplary embodiment of the present invention.

Referring to FIG. 8, the earphone 400 may include a speaker 410, a microphone 420, a jack 430 and a tag 440.

The speaker 410 outputs a signal transmitted from the electronic apparatus 100 as a sound signal. In detail, the speaker 410may include a left speaker and a right speaker so as to output the signal transmitted from the electronic apparatus 100 as 2 channels.

The speaker 410 may include a sound level adjuster or a volume adjuster so as to adjust the intensity of sound.

The microphone 420 receives an external sound signal. In detail, the microphone 420 may receive a sound signal and transmit to the electronic apparatus 100. The microphone 420 may include a filter circuit to remove an unnecessary noise.

The jack 430 connects the electronic apparatus 100 and the earphone 400. In detail, the jack 430 may physically and electrically connect to the jack connector 160 of the electronic apparatus 100.

The jack 430 may be configured as various types of arrays of terminals according to the manufacturers. As an example, the array of terminals of the jack 430 may be one of Ground/Mic/Left/Right, Left/Right/Ground/Mic and Left/Right/Mic/Ground. The array of terminals of the jack may be designed variously according to manufacturers.

The jack 430 is electrically connected to the speaker 410 and the microphone 420 so as to be connected to the electronic apparatus 100.

Accordingly, when the array of the terminals of the jack 430 does not correspond to an input of the signal processor 170 connected by the jack connector 160 of the electronic apparatus 100, a speaker function and a microphone function may not be used.

The tag 440 stores therein interface information of the earphone 400 and provides the interface information to the electronic apparatus 100 when a local access to the electronic apparatus 100 is conducted.

The interface information may include information on an array of terminals of the jack 430.

The tag 440 may be an RFID tag or an NFC tag.

The earphone 400 explained with regard to FIG. 8 may include a tag 440 and provides an interface specification of the earphone 400 to the electronic apparatus 100 so that the electronic apparatus 100 determines a corresponding array of jack terminals and the earphone 400 may be automatically connected to the signal processor 170 of the electronic apparatus 100.

FIG. 9 is a view illustrating an array of a terminal of a jack of the earphone 400 of FIG. 6 according to an exemplary embodiment of the present invention.

In general, the terminals of the jack 430 are configured as 4 pole terminals, and the terminal array may be mainly divided into an American method and a European method.

Referring to FIG. 9, an array of L (Left)/R (Right)/M (Mic)/G (Ground) from a head of the jack 430 is an array of terminals according to a European method 431.

An array of L (Left)/R (Right)/G (Ground)/M (Mic) from a head of the jack 430 is an array of terminals according to an American method 432.

A 4-pole terminal used in an electronic apparatus such as a portable multimedia player (PMP) may be designed as a terminal array 433 of L (Left)/R (Right)/A (Antenna/RemoteControl)/G (Ground) from the head of the jack 430. In this case, an antenna or a special function (remote controller) of a digital multimedia broadcast (DMB) may be supported instead of the Mic. function.

When a 4-pole terminal according to the American method is connected to an electronic apparatus supporting a 4-pole terminal according to the European method as explained in FIG. 9, the terminal arrays of Mic. and Ground are different, and thus the earphone may not be operated. However, the earphone 400 according to this exemplary embodiment provides interface information to the electronic apparatus 100 so that the electronic apparatus 100 can use the earphone 400 with various terminal arrays.

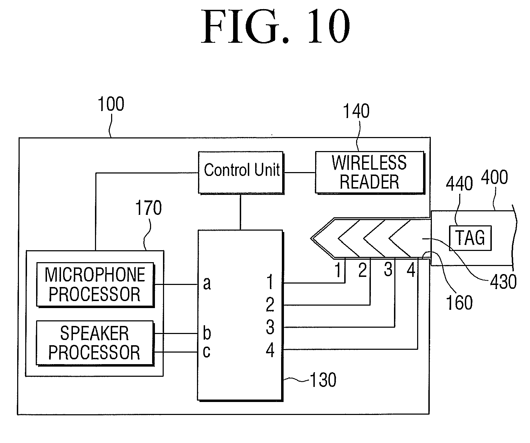

FIG. 10 is a view illustrating a method of connecting the electronic apparatus 100 and the earphone 400 of FIG. 6 according to an exemplary embodiment of the present invention.

Referring to FIG. 10, the earphone 400 connected to the electronic apparatus 100 may provide interface information stored in the tag 440, i.e., terminal information of the jack 430, via the wireless reader 140 to the electronic apparatus 140.

Accordingly, the controller 150 may determine the received terminal array of the jack and control the switch 130 to connect to the signal processor 170 to correspond to the terminal array of the jack.

In detail, the switch 130 may connect the terminal 1, terminal 2, terminal 3 and terminal 4 of the jack 430 connected via the jack connector 160 to a terminal a of the microphone processor of the signal processor 170, and a terminal b (Left) and a terminal c (Right) of the speaker processor of the signal processor 170 under the control of the controller 150.

As an example, in an array of "Left" at the terminal 1, "Right" at the terminal 2, "Mic" at the terminal 3 and "Ground" at the terminal 4 of the jack (430) (4-pole terminals according to the European method), the switch 130 may connect the terminal 1 to the terminal b, the terminal 2 to the terminal c, the terminal 3 to the terminal a, and the terminal 4 to a circuit ground unit (not illustrated) under the control of the controller 150.

As explained in FIG. 10, the electronic apparatus 100 receives interface information of the earphone 400, i.e., the terminal array information of the jack 430, and automatically determines the terminal array so that various types of earphones can be used with the electronic apparatus 100.

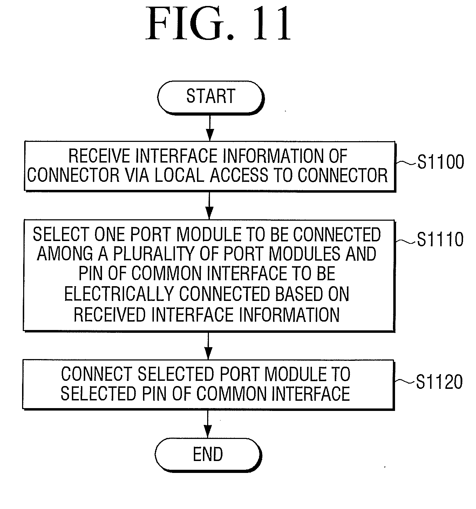

FIG. 11 is a flowchart illustrating a method of connecting an electronic apparatus and a peripheral device according to an exemplary embodiment of the present invention.

The electronic apparatus can be connected via a connector to a peripheral device and may include a plurality of port modules.

The plurality of modules may be a USB module, a HDMI module, an IEEE1394 module, an SCSI module, an EIDE module, a SATA module, a Display Port, a LAN module, a Multi-card reader module and an audio module.

When the connector is connected to the electronic apparatus, the electronic apparatus receives interface information of the connector through a local access to the connector at operation S1100.

The interface information may comprise interface specification information supported by the connector and pin information of the connector.

Based on the received interface information, the electronic apparatus selects one port module to be connected among a plurality of port modules and a pin of a common interface 110 to be electrically connected at operation S1110.

The electronic apparatus connects the selected port module and the selected pin of the common interface at operation S1120.

According to the method of connecting the electronic apparatus and the peripheral device according to the exemplary embodiment, the electronic apparatus may automatically connect various peripherals based on interface information provided from the connector.

In addition, the electronic apparatus does not need to have a structure with various interface ports so that the electronic apparatus can be miniaturized and slimmed.

Meanwhile, the method of connecting the electronic apparatus and the peripheral device as illustrated in FIG. 11 may be carried out in the electronic apparatus 100 having the configuration illustrated in FIGS 1-5, and may be also carried out in electronic apparatuses having other configurations.

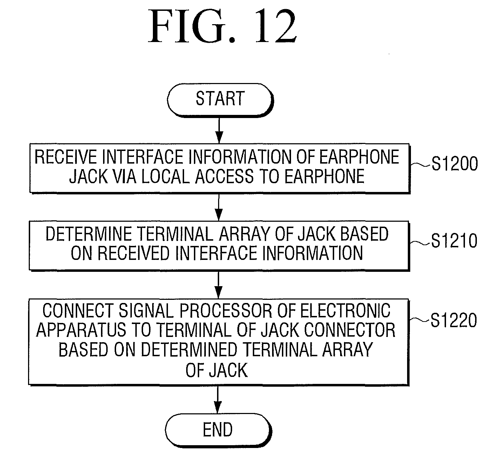

FIG. 12 is a flowchart illustrating a method of connecting an electronic apparatus and an earphone according to an exemplary embodiment of the present invention.

When the earphone is connected to the electronic apparatus, the electronic apparatus receives interface information of the jack of the earphone through a local access to the earphone at operation S1200.

The interface information may include terminal array information of the earphone jack.

The electronic apparatus determines a terminal array of the jack based on the received interface information at operation S1210.

As an example, the terminal array of the jack may be at least one of Ground/Mic/Left/Right, Left/Right/Ground/Mic and Left/Right/Mic/Ground.

The electronic apparatus connects a signal processor of the electronic apparatus and a terminal of a jack connector according to the determined terminal array of the jack at operation S1220.

According to the method of connecting the earphone according to this exemplary embodiment, the electronic apparatus automatically determines the terminal array of the earphone jack so that various types of earphones can be used with the electronic apparatus.

Meanwhile, the method of connecting the electronic apparatus and the earphone illustrated in FIG. 12 may be carried out in the electronic apparatus (100) having the configuration illustrated in FIGS. 7-10, and may be also carried out in electronic apparatuses having other configurations.

The methods according to various exemplary embodiments may be programmed and stored in various kinds of storage media. Accordingly, the methods according to the aforementioned various exemplary embodiments may be implemented in various kinds of electronic apparatuses executing a storage medium.

The aforementioned method of connecting the peripheral device or earphone may be implemented as a program including an algorithm executable in a computer, and the program may be provided by being stored in a non-transitory computer readable medium.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include a semiconductor memory, a read-only memory (ROM), a random-access memory (RAM), a USB memory, a memory card, a Blu-Ray disc, CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains

Although a few embodiments of the present invention have been shown and described, it will be appreciated by those skilled in the art that changes may be made in these embodiments without departing from the invention, the scope of which is defined in the appended claims.

## Claims

1. An electronic apparatus (100) capable of being connected via a connector (200) to a peripheral device (300), and the connector comprises a first connector (210) connectable to the peripheral device and a second connector (220) connectable to the electronic apparatus as an interface which is different from the first connector, the electronic apparatus comprising:
a common interface (110) to be connected to the connector;
a plurality of port modules (120) for processing a signal received from the common interface;
a switch (130) configured to connect one of the plurality of port modules to the common interface;
a wireless reader (140) configured to receive interface information of the connector through a local access to the connector; and
a controller (150) configured to select, based on the received interface information, one port module to be connected among the plurality of port modules and a pin of the common interface to be electrically connected and to control the switch to connect the selected port module and the pin of the common interface.

2. The electronic apparatus (100) of claim 1, wherein the plurality of port modules (120) comprises at least one of a USB host module, an HDMI module, an IEEE 1394 module, an SCSI module, an EIDE module, a SATA module, a display part module, a LAN module, a multi-card reader module and an audio module.

3. The electronic apparatus (100) of claim 1 or claim 2, wherein the interface information comprises interface specification information supported by the connector (200) and pin information of the connector.

4. The electronic apparatus (100) of any one of claims 1-3, wherein a number of the pins of the common interface (110) are provided to cover a supportable interface specification of the peripheral device (300).

5. A connector (200) to connect a peripheral device (300) to an electronic apparatus (100), the connector comprising:
a first connector (210) configured as a first interface type to connect the peripheral device;
a second connector (220) configured as a second interface type to connect the electronic apparatus; and
a tag (230) configured to store interface information of the connector and to provide the interface information to the electronic apparatus when a local access to the electronic apparatus is conducted.

6. The connector (200) of claim 5, wherein the tag (230) comprises one of an RFID tag and an NFC tag.

7. The connector (200) of claim 5 or claim 6, wherein the interface information comprises interface specification information supported by the connector and pin information of the connector.

8. An electronic apparatus (100) capable of being connected to an earphone (400), the electronic apparatus comprising:
a jack connector (160) configured to be connected to a jack (430) of the earphone;
a signal processor (170) configured to process a signal received from and transmitted to the earphone;
a switch (130) configured to connect the signal processor and a terminal of the jack connector;
a wireless reader (140) configured to receive interface information of the jack through a local access to the earphone; and
a controller (150) configured to determine, based on the received interface information, an array of the terminal of the jack, and to control the switch to connect the signal processor and the terminal of the jack connector according to the determined array of the terminal.

9. The electronic apparatus (100) of claim 8, wherein the array of the terminal of the jack (430) comprises at least one of Ground/Mic/Left/Right, Left/Right/Ground/Mic and Left/Right/Mic/Ground.

10. The electronic apparatus (100) of claim 8 or claim 9, wherein the interface information comprises information on the array of the terminal of the jack (430).

11. The electronic apparatus (100) of claim 1 or 9, wherein the wireless reader (140) comprises at least one of an RFID reader and an NFC reader.

12. An earphone (400) comprising:
a speaker (410);
a microphone (420);
a jack (430) connected to the speaker and the microphone and configured to connect an electronic apparatus (100); and
a tag (440) configured to store interface information of the jack and provide the information of the jack to the electronic apparatus when a local access to the electronic apparatus is conducted;
wherein the interface information comprises information on an array of a terminal of the jack.

13. The earphone (400) of claim 12, wherein the tag comprises one of an RFID tag and an NFC tag.

14. The earphone (400) of any one of claims 12-13, wherein the array of the terminal of the jack comprises at least one of Ground/Mic/Left/Right, Left/Right/Ground/Mic and Left/Right/Mic/Ground.

## Patentansprüche

1. Elektronische Vorrichtung (100), die fähig ist, über einen Stecker (200) an eine Peripherievorrichtung (300) angeschlossen zu werden, und wobei der Stecker einen ersten Stecker (210), der an die Peripherievorrichtung anschließbar ist, und einen zweiten Stecker (220) umfasst, der als eine Schnittstelle an die elektronische Vorrichtung anschließbar ist, welche vom ersten Stecker verschieden ist, wobei die elektronische Vorrichtung umfasst:
Eine gemeinsame Schnittstelle (110), die an den Stecker anzuschließen ist;
eine Vielzahl von Port-Modulen (120) zum Verarbeiten eines von der gemeinsamen Schnittstelle empfangenen Signals;
einen Schalter (130), der konfiguriert ist, eines der Vielzahl von Port-Modulen an die gemeinsamen Schnittstelle anzuschließen;
ein drahtloses Lesegerät (140), das konfiguriert ist, Schnittstelleninformation des Steckers durch einen lokalen Zugang zum Stecker zu empfangen; und
eine Steuereinheit (150), die konfiguriert ist, auf der empfangenen Schnittstelleninformation beruhend, ein Port-Modul, das unter der Vielzahl von Port-Modulen anzuschließen ist, und einen Stift der gemeinsamen Schnittstelle zu selektieren, der elektrisch anzuschließen ist, und den Schalter zu steuern, um das selektierte Port-Modul und den Stift der gemeinsamen Schnittstelle zu verbinden.

2. Elektronische Vorrichtung (100) nach Anspruch 1, wobei die Vielzahl von Port-Modulen (120) wenigstens eins von einem USB-Host-Modul, einem HDMI-Modul, einem IEEE-1394-Modul, einem SCSI-Modul, einem EIDE-Modul, einem SATA-Modul, einem Anzeigeteil-Modul, einem LAN-Modul, ein Multi-card-Lesemodul und ein Audiomodul umfasst.

3. Elektronische Vorrichtung (100) nach Anspruch 1 oder Anspruch 2, wobei die Schnittstelleninformation, Schnittstellenspezifikationsinformation umfasst, die vom Stecker (200) und der Stiftinformation des Steckers unterstützt wird.

4. Elektronische Vorrichtung (100) nach einem der Ansprüche 1-3, wobei eine Reihe der Stifte der gemeinsamen Schnittstelle (110) vorgesehen sind, eine unterstützbare Schnittstellenspezifikation der Peripherievorrichtung (300) abzudecken.

5. Stecker (200) zum Anschließen einer Peripherievorrichtung (300) an eine elektronische Vorrichtung (100), wobei der Stecker umfasst:
Einen ersten Stecker (210), der als ein erster Schnittstellentyp konfiguriert ist, um die Peripherievorrichtung anzuschließen;
einen zweiten Stecker (220), der als ein zweiter Schnittstellentyp konfiguriert ist, um die elektronische Vorrichtung anzuschließen; und
ein Tag (230), das konfiguriert ist, Schnittstelleninformation des Steckers zu speichern und die Schnittstelleninformation der elektronischen Vorrichtung bereitzustellen, wenn ein lokaler Zugang zur elektronischen Vorrichtung ausgeführt wird.

6. Stecker (200) nach Anspruch 5, wobei das Tag (230) eins von einem RFID-Tag und einem NFC-Tag umfasst.

7. Stecker (200) nach Anspruch 5 oder Anspruch 6, wobei die Schnittstelleninformation, Schnittstellenspezifikationsinformation umfasst, die vom Stecker und der Stiftinformation des Steckers unterstützt wird.

8. Elektronische Vorrichtung (100), die fähig ist, an einen Kopfhörer (400) angeschlossen zu werden, wobei die elektronische Vorrichtung umfasst:
Einen Buchsenstecker (160), der konfiguriert ist, an eine Buchse (430) des Kopfhörers angeschlossen zu werden;
Einen Signalprozessor (170), der konfiguriert ist, ein Signal zu verarbeiten, das vom Kopfhörer empfangen und an diesen gesendet wurde;
einen Schalter (130), der konfiguriert ist, den Signalprozessor und einen Anschluss des Buchsensteckers zu verbinden;
ein drahtloses Lesegerät (140), das konfiguriert ist, Schnittstelleninformation der Buchse durch einen lokalen Zugang zum Kopfhörer zu empfangen; und
eine Steuereinheit (150), die konfiguriert ist, auf der empfangenen Schnittstelleninformation beruhend, eine Anordnung des Anschlusses der Buchse zu ermitteln und den Schalter zu steuern, um den Signalprozessor und den Anschluss des Buchsensteckers gemäß der ermittelten Anordnung des Anschlusses anzuschließen.

9. Elektronische Vorrichtung (100) nach Anspruch 8, wobei die Anordnung des Anschlusses der Buchse (430) wenigstens eins von Erde/Mik/Links/Rechts, Links/Rechts/Erde/Mik und Links/Rechts/Mik/Erde umfasst.

10. Elektronische Vorrichtung (100) nach Anspruch 8 oder Anspruch 9, wobei die Schnittstelleninformation, Information über die Anordnung des Anschlusses der Buchse (430) umfasst.

11. Elektronische Vorrichtung (100) nach Anspruch 1 oder 9, wobei das drahtlose Lesegerät (140) wenigstens eins von einem RFID-Lesegerät und einem NFC-Lesegerät umfasst.

12. Kopfhörer (400), umfassend:
Einen Lautsprecher (410);
ein Mikrofon (420);
eine Buchse (430), die an den Lautsprecher und an das Mikrofon angeschlossen ist und konfiguriert ist, eine elektronische Vorrichtung (100) zu verbinden; und
ein Tag (440), das konfiguriert ist, Schnittstelleninformation der Buchse zu speichern und die Information der Buchse der elektronischen Vorrichtung bereitzustellen, wenn ein lokaler Zugang zur elektronischen Vorrichtung ausgeführt wird;
wobei die Schnittstelleninformation, Information über eine Anordnung eines Anschlusses der Buchse umfasst.

13. Kopfhörer (400) nach Anspruch 12, wobei das Tag eins von einem RFID-Tag und einem NFC-Tag umfasst.

14. Kopfhörer (400) nach einem der Ansprüche 12-13, wobei die Anordnung des Anschlusses der Buchse wenigstens eins von Erde/Mik/Links/Rechts, Links/Rechts/Erde/Mik und Links/Rechts/Mik/Erde umfasst.

## Revendications

1. Appareil électronique (100) en mesure d'être connecté par le biais d'un connecteur (200) à un dispositif périphérique (300), et le connecteur comporte un premier connecteur (210) en mesure d'être connecté au dispositif périphérique et un deuxième connecteur (220) en mesure d'être connecté à l'appareil électronique sous la forme d'une interface qui diffère du premier connecteur, l'appareil électronique comportant :
une interface commune (110) devant être connectée au connecteur ;
une pluralité de modules formant port (120) servant à traiter un signal reçu en provenance de l'interface commune ;
un commutateur (130) configuré à des fins de connexion de l'un de la pluralité de modules formant port à l'interface commune ;
un lecteur sans fil (140) configuré à des fins de réception d'informations d'interface du connecteur par un accès local au connecteur ; et
un dispositif de commande (150) configuré à des fins de sélection, en fonction des informations d'interface reçues, d'un module formant port devant être connecté parmi la pluralité de modules formant port et d'une broche de l'interface commune devant être connectée électriquement et à des fins de commande du commutateur pour connecter le module formant port sélectionné et la broche de l'interface commune.

2. Appareil électronique (100) selon la revendication 1, dans lequel la pluralité de modules formant port (120) comporte au moins l'un parmi un module hôte USB, un module HDMI, un module IEEE 1394, un module SCSI, un module EIDE, un module SATA, un module formant pièce d'affichage, un module LAN, un module formant lecteur multicarte et un module audio.

3. Appareil électronique (100) selon la revendication 1 ou la revendication 2, dans lequel les informations d'interface comportent des informations se rapportant à la spécification d'interface prise en charge par le connecteur (200) et des informations se rapportant aux broches du connecteur.

4. Appareil électronique (100) selon l'une quelconque des revendications 1 à 3, dans lequel un certain nombre parmi les broches de l'interface commune (110) sont mises en oeuvre pour couvrir une spécification d'interface en mesure d'être prise en charge du dispositif périphérique (300).

5. Connecteur (200) servant à connecter un dispositif périphérique (300) à un appareil électronique (100), le connecteur comportant :
un premier connecteur (210) configuré sous la forme d'un premier type d'interface à des fins de connexion du dispositif périphérique ;
un deuxième connecteur (220) configuré sous la forme d'un deuxième type d'interface à des fins de connexion de l'appareil électronique ; et
une étiquette (230) configurée à des fins de stockage d'informations d'interface du connecteur et à des fins de fourniture des informations d'interface à l'appareil électronique quand un accès local à l'appareil électronique est effectué.

6. Connecteur (200) selon la revendication 5, dans lequel l'étiquette (230) comporte l'une parmi une étiquette RFID et une étiquette NFC.

7. Connecteur (200) selon la revendication 5 ou la revendication 6, dans lequel les informations d'interface comportent des informations se rapportant à la spécification d'interface prise en charge par le connecteur et des informations se rapportant aux broches du connecteur.

8. Appareil électronique (100) en mesure d'être connecté à un écouteur (400), l'appareil électronique comportant :
un connecteur de type jack (160) configuré à des fins de connexion à un jack (430) de l'écouteur ;
un processeur de signaux (170) configuré à des fins de traitement d'un signal reçu en provenance de l'écouteur et transmis à celui-ci ;
un commutateur (130) configuré à des fins de connexion au processeur de signaux et à une borne du connecteur de type jack ;
un lecteur sans fil (140) configuré à des fins de réception d'informations d'interface du jack par un accès local à l'écouteur ; et
un dispositif de commande (150) configuré à des fins de détermination, en fonction des informations d'interface reçues, d'une matrice de la borne du jack, et à des fins de commande du commutateur pour connecter le processeur de signaux et la borne du connecteur de type jack en fonction de la matrice déterminée de la borne.

9. Appareil électronique (100) selon la revendication 8, dans lequel la matrice de la borne du jack (430) comporte au moins l'une parmi Masse/Mic/Gauche/Droite, Gauche/Droite/Masse/Mic et Gauche/Droite/Mic/Masse.

10. Appareil électronique (100) selon la revendication 8 ou la revendication 9, dans lequel les informations d'interface comportent des informations se rapportant à la matrice de la borne du jack (430).

11. Appareil électronique (100) selon la revendication 1 ou la revendication 9, dans lequel le lecteur sans fil (140) comporte au moins l'un parmi un lecteur RFID et un lecteur NFC.

12. Écouteur (400) comportant :
un haut-parleur (410) ;
un microphone (420) ;
un jack (430) connecté au haut-parleur et au microphone et configuré à des fins de connexion à un appareil électronique (100) ; et
une étiquette (440) configurée à des fins de stockage d'informations d'interface du jack et à des fins de fourniture d'informations du jack à l'appareil électronique quand un accès local à l'appareil électronique est effectué ;
dans lequel les informations d'interface comportent des informations se rapportant à une matrice d'une borne du jack.

13. Écouteur (400) selon la revendication 12, dans lequel l'étiquette comporte l'une parmi une étiquette RFID et une étiquette NFC.

14. Écouteur (400) selon l'une quelconque des revendications 12 et 13, dans lequel la matrice de la borne du jack comporte au moins l'une parmi Masse/Mic/Gauche/Droite, Gauche/Droite/Masse/Mic et Gauche/Droite/Mic/Masse.
